# EUROPÄISCHE PATENTSCHRIFT

(11) **EP 3 611 422 B1**
(45) Veröffentlichungstag und Bekanntmachung des Hinweises auf die Patenterteilung: **14.10.2020**
(21) Anmeldenummer: 18189151.6
(22) Anmeldetag: 15.08.2018
(51) Int. Cl.: F16P 3/14, G01S 17/02, G01V 8/20

(54) **SENSORANORDNUNG UND VERFAHREN ZUM ABSICHERN EINES ÜBERWACHUNGSBEREICHS**
SENSOR ASSEMBLY AND METHOD FOR SECURING A SUPERVISED AREA
DISPOSITIF CAPTEUR ET PROCÉDÉ DE SÉCURISATION D'UNE ZONE DE SURVEILLANCE

(43) Veröffentlichungstag der Anmeldung: 19.02.2020
(73) Patentinhaber: SICK AG, 79183 Waldkirch (DE)
(72) Erfinder: Böhning, Markus, 22307 Hamburg (DE); Druzella, Ulrich, 79183 Waldkirch (DE); Schubert, Lars, 21073 Hamburg (DE); Steinkemper, Dr. Heiko, 79183 Waldkirch (DE)

(56) Entgegenhaltungen:
- EP-A1- 1 752 702
- EP-A1- 2 282 106
- DE-U1- 29 602 098
- DE-U1-202018 103 012

## Beschreibung

Die Erfindung betrifft eine Sensoranordnung und ein Verfahren zum Absichern eines Überwachungsbereichs nach dem Oberbegriff von Anspruch 1 beziehungsweise 15.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Das gängige Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein eines Werkers, so löst er einen sicherheitsgerichteten Halt der Maschine aus. In einigen Fällen werden den Schutzfeldern zusätzliche Warnfelder vorgelagert, um eine Person noch rechtzeitig an einer Schutzfeldverletzung zu hindern oder um vorsorglich die Arbeitsgeschwindigkeit der Maschine zu verringern. Schutzfelder müssen, um allen denkbaren Fällen gerecht zu werden, relativ groß ausgelegt werden, so dass es vergleichsweise früh zu einer Systemreaktion kommt, welche die Produktivität reduziert.

Schutzfelder lassen außerdem keine enge Zusammenarbeit mit Maschinen zu, insbesondere mit Robotern (MRK, Mensch-Roboter-Kollaboration). Relevante Normen in diesem Zusammenhang sind beispielsweise die ISO 10218 für Industrieroboter oder die ISO 15066 für kollaborierende Roboter. In der MRK sollten Sicherheitsabstände möglichst klein und eventuell sogar situationsangepasst konfiguriert werden, natürlich unter der Vorgabe, dass die Sicherheit gewährleistet bleibt. Die Normen ISO 13854, ISO 13855, ISO 13857 befassen sich mit der Festlegung von Sicherheitsabständen. Eine Bewertung von Objekten und Maschinen bezüglich Geschwindigkeit und gegenseitiger Entfernung wird in den genannten Roboternormen als "Speed and Separation Monitoring" bezeichnet. Dabei wird zweckmäßigerweise nicht der Abstand zu der Maschine selbst berechnet. Das wäre zu komplex und dynamisch, und es soll auch ein ausreichender Sicherheitsabstand zu künftigen Maschinenpositionen eingehalten werden. Deshalb ist es sinnvoll, eine Gefahrenstelle vorzugeben, also einen Raumbereich oder ein Volumen, innerhalb dessen die Maschine Arbeitsbewegungen ausführt.

In den bekannten Absicherungskonzepten, wie z.B. aus EP2282106 bekannt, sind solche Ansätze noch nicht befriedigend umgesetzt. Es wird immer noch zu häufig mit "worst-case"-Annahmen gearbeitet, ohne situativ auf das tatsächliche momentane Risiko zu reagieren. Das betrifft Sicherheitsabstände und Puffer, aber auch die erfassten Objekte, die gleich behandelt und nicht nach Menschen und anderen mobilen oder statischen Objekten differenziert werden. Die Zugänglichkeit der Anlage und die Zusammenarbeit zwischen Werker und Maschine bleibt erheblich einschränkt. Deshalb wird weiterhin viel Produktionsfläche benötigt, und die angestrebte Flexibilitätssteigerung gelingt nicht.

Die DE 10 2004 038 906 B4 offenbart eine berührungslos wirkende Schutzeinrichtung, bei der eine kontaktlose Erkennungseinrichtung vor einem Eintritt eines Objekts in den Überwachungsbereich eine auf dem Objekt angebrachte Marke liest und die Schutzeinrichtung entsprechend konfiguriert. Auf diese Weise können Objekte mittels der Marke eine Überbrückung der Schutzeinrichtung aktivieren und passieren, ohne die Schutzfunktion auszulösen. Die DE 10 2004 038 906 B4 betrifft aber ein Lichtgitter, das schon aufgrund des Sensortyps nicht für eine flexible Überwachung mit Mensch-Maschine-Kooperation geeignet ist. Das Lichtgitter trägt den Schutzfeldgedanken schon im Sensorprinzip.

In der EP 1 164 556 B1 wird ein als berührungslos wirkende Schutzeinrichtung fungierendes Lichtgitter mit einer Kamera kombiniert, die beidseits des Lichtgitters Objekte erfasst und klassifiziert. Für als zulässig erkannte Objekte wird das Lichtgitter vorübergehend deaktiviert. Das ist eine Alternative zu einer Marke wie in DE 10 2004 038 906 B4, um zulässige Objekte zu erkennen und passieren zu lassen. Es bleibt aber bei den beschriebenen Nachteilen eines Lichtgitters.

Die EP 1 826 589 B1 überwacht eine Schutzzone mit einer Kamera. Sie ist in der Lage, sicherheitskritische und nicht sicherheitskritische Objekte anhand einer erfassten Markierung auf dem Objekt zu unterscheiden und einen Bereich der Schutzzone für ein nicht sicherheitskritisches Objekt zu überbrücken, wobei der Bereich durch in der Markierung codierte Informationen vorgegeben wird. Obwohl anstelle eines Lichtgitters eine Kamera eingesetzt ist, bleibt das Sicherheitskonzept daran angelehnt und nutzt jedenfalls weiterhin ein sogar statisch definiertes Schutzfeld, das lediglich vorübergehend teilweise deaktiviert wird.

Aus der DE 10 2004 044 973 A1 ist ein Laserscanner oder ein Kamerasystem bekannt, das eine Kontur eines im Überwachungsbereich zugelassenen Objekts erkennt. Bei Objekten, deren Kontur nicht als zulässig identifiziert werden kann, wird ein Sicherheitssignal ausgegeben. Gerade einer Person würde man aber nicht erlauben, sich beliebig anzunähern, so dass dieses Konzept nicht auf eine enge Mensch-Maschine-Kooperation übertragbar ist. Abgesehen davon wäre es auch ausgesprochen schwierig, eine Person aufgrund einer Kontur mit einer Verlässlichkeit zu identifizieren, die den Anforderungen einer sicherheitstechnischen Anwendung genügt.

Die EP 1 635 107 B1 verwendet Schutzfelder, die in Abhängigkeit von Parametern einer Maschinensteuerung der überwachten Maschine dynamisch verändert werden. Die jeweilige Berechnung der Schutzfelder ist aufwändig, zumal wenn die Schutzfelder knapp ausgelegt werden sollen, um tatsächlich die Flexibilität zu verbessern. Grundsätzlich von dem Schutzfeldgedanken lösen kann sich die EP 1 635 107 B1 nicht.

Es ist daher Aufgabe der Erfindung, die Überwachung einer Maschine zu verbessern.

Diese Aufgabe wird durch eine Sensoranordnung und ein Verfahren zum Absichern eines Überwachungsbereichs mit mindestens einer Gefahrenstelle zu einer Maschine nach Anspruch 1 beziehungsweise 15 gelöst. Eine Gefahrenstelle ist ein Raumbereich, der eine Maschine absichert, damit niemand von der Maschine verletzt wird. Demnach dürfen sich Personen dort nicht aufhalten, weil es sonst zu einem Unfall kommt. Dazu liegt bevorzugt die Maschine zumindest teilweise in der Gefahrenstelle. Es ist denkbar, verschiedene Bereiche einer Maschine oder mehrere Maschinen mit mehreren Gefahrenstellen abzusichern. Eine Gefahrenstelle darf nicht mit einem Schutzfeld verwechselt werden, das nämlich der Gefahrenstelle vorgelagert ist, um eine Annäherung von Personen an die Gefahrenstelle zu verhindern. Ein Schutzfeld ist üblicherweise im Gegensatz zu der Gefahrenstelle frei von jeglichen beweglichen Maschinenteilen.

Mindestens ein optoelektronischer Überwachungssensor erfasst Objekte in dem Überwachungsbereich. Der Überwachungssensor ist vorzugsweise sicher, also für eine sicherheitstechnische Anwendung ausgelegt, und erfüllt dafür die einleitend genannten oder entsprechende Normen, um eine gefahrbringende Maschine abzusichern. Typischerweise umfasst ein optoelektronischer Überwachungssensor zumindest einen Lichtempfänger, mit dem aus Empfangslicht aus dem Überwachungsbereich ein Empfangssignal gewonnen wird. Die Ausgestaltung des Lichtempfängers und damit die Art des Empfangssignals hängen von der Art des Überwachungssensors ab. Ein Beispiel für den Lichtempfänger ist ein Bildsensor, bei dem die aus den Pixeln ausgelesenen Informationen summarisch als Empfangssignal bezeichnet werden.

Eine Steuer- und Auswertungseinheit bestimmt die Positionen der erfassten Objekte, insbesondere aus dem Empfangssignal eines Lichtempfängers, und vergleicht diese Positionen mit der Gefahrenstelle. Wird demnach die momentane Position als gefährlich bewertet, etwa weil ein Objekt einer Gefahrenstelle zu nahe kommt, so wird eine sicherheitsgerichtete Reaktion der Maschine eingeleitet. Die Steuer- und Auswertungseinheit bezeichnet hierbei analoge Schaltungen oder digitale Auswertungsbausteine des Überwachungssensors selbst oder anderer Vorrichtungen der Sensoranordnung. Eine Minimalkonfiguration der Sensoranordnung ist demnach ein einzelner Überwachungssensor mit interner Steuer- und Auswertungseinheit.

Die Erfindung geht von den Grundgedanken aus, nicht ausschließlich auf Personen als erfasste Objekte ausgerichtet zu sein, die vor der Maschine geschützt werden. Vielmehr soll auch die Möglichkeit bestehen, ein erfasstes Objekt als eigenen Ausgangspunkt einer Gefahr zu behandeln. Das betrifft bevorzugt nur bestimmte erfasste Objekte, die tatsächlich einer Absicherung bedürfen und die als Ausgangspunkt einer eigenen Gefahr identifiziert werden, beispielsweise mobile Maschinen. Um diese abzusichern, wird zu einem erfassten Objekt eine weitere Gefahrenstelle erzeugt und überwacht. Die übrigen erfassten Objekte werden weiterhin als unbekannte Objekte und damit wie potentielle Personen behandelt, die sich nicht in gefährlicher Position bezüglich einer Gefahrenstelle befinden dürfen, oder gegebenenfalls noch als bekannte zulässige Objekte, die ignoriert werden. Die weitere Gefahrenstelle ist vorzugsweise mobil, sie entsteht mit Eindringen des erfassten Objekts in den Überwachungsbereich und folgt dessen weiterer Bewegung. Verlässt das Objekt den Überwachungsbereich, kann die weitere Gefahrenstelle nicht mehr überwacht und daher aufgelöst werden.

Die Erfindung hat den Vorteil, dass durch eine differenzierte Behandlung von erwarteten Objekten und dem zu schützenden Werker eine produktivere Mensch-Maschine Kollaboration möglich wird. Die Sicherheit des Werkers hat dabei unverändert höchste Priorität. Eine situationsangepasste Erfassung und Bewertung des Risikos mit dynamischer Anpassung von statischen wie mobilen Gefahrenstellen erlaubt eine engere Zusammenarbeit, in der erforderliche Sicherheitsabstände sich an dem tatsächlichen Risiko und nicht pauschalen Szenarien richten. Es kann auch frühzeitig sowie durch Maßnahmen wie Neuplanung von Arbeitsschritten und Bahnen sowie reduzierte Arbeits- und Bewegungsgeschwindigkeiten auf den Werker reagiert werden, um in der Regel einen Nothalt zu vermeiden und einen automatischen Wiederanlauf zu ermöglichen.

Der Vergleich der Position erfasster Objekte mit einer Gefahrenstelle weist vorzugsweise die Bestimmung eines kürzesten Abstands eines Objekts zu der Gefahrenstelle auf. Damit ist der Abstand des Objekts zu der Gefahrenstelle ein Kriterium, ob eine Position gefährlich ist, oder in bevorzugter Ausführungsform sogar das wichtigste oder einzige Kriterium. Anders ausgedrückt wird die Gefährdung anhand des minimalen noch eingehaltenen Sicherheitsabstands bewertet. Der kürzeste Abstand muss nicht das einzige Kriterium bleiben. Ein bevorzugtes Zusatzkriterium ist der Bewegungsvektor eines Objekts, also dessen Geschwindigkeit und Bewegungsrichtung. Unter Objekt kann hier sowohl ein unbekanntes erfasstes Objekt gemeint sein, von dem sicherheitshalber angenommen wird, dass es eine Person ist, als auch eine mobile Maschine oder dergleichen, womit dann der Bewegungsvektor der Gefahrenstelle betrachtet wird. Ein weiteres Kriterium lässt sich aus der Bewegungshistorie ableiten, indem daraus eine künftige Veränderung des Bewegungsvektors antizipiert wird.

Die Sensoranordnung ist vorzugsweise in der Lage, mehrere Gefahrenstellen zu überwachen. Dafür kann es verschiedene Gründe geben. Zum einen soll in einer bevorzugten Grundkonfiguration eine stationäre Maschine als Gefahrenstelle überwacht werden, und wenn dann ein erfasstes Objekt als zusätzlicher Ausgangspunkt einer Gefahr identifiziert wird, insbesondere als mobile Maschine, dann kommt die weitere Gefahrenstelle zur Absicherung der neuen Gefahr hinzu. Weiterhin ist der Fall denkbar, dass mehrere erfasste Objekte mit einer weiteren Gefahrenstelle abgesichert werden. Andere Beispiele sind mehrere stationäre Maschinen schon in der Grundkonfiguration, oder eine einzelne Maschine mit mehreren gefährlichen Teilbereichen, für die mehrere kleinere Gefahrenstellen statt eines einzigen, unnötig großen Hüllkörpers überwacht werden. Bei Überwachung mehrerer Gefahrenstellen wird vorzugsweise der über alle Gefahrenstellen und Objekte kürzeste Abstand, alternativ für jede Gefahrenstelle ein kürzester Abstand zum jeweils nächsten Objekt bestimmt.

Die Steuer- und Auswertungseinheit ist bevorzugt dafür ausgebildet, Objekte innerhalb von Gefahrenstellen zu ignorieren. Die Gefahrenstelle selbst wird also als frei von zu erfassenden Objekten angesehen, oder vielmehr als durch die Maschine blockiert. Tatsächlich wäre je nach Hüllkörper, der die Maschine als Gefahrenstelle modelliert, durchaus Raum für solche Objekte. Auch bildet die Maschine natürlich selbst ein Objekt, das zunächst von dem Überwachungssensor erfasst wird. All das wird aber vorzugsweise absichtlich ignoriert und die Gefahrenstelle als leerer, von Objekten freier Block modelliert. Das vereinfacht die Überwachung und die Bestimmung kürzester Abstände, denn die Dynamik der Maschine innerhalb der Gefahrenstelle spielt so keine Rolle. Sicherheitstechnisch ist dies auch unproblematisch, denn jedes Objekt wird rechtzeitig erkannt, wenn es sich der Gefahrenstelle nähert.

Die Steuer- und Auswertungseinheit ist bevorzugt dafür ausgebildet, die weitere Gefahrenstelle als eine dynamische Gefahrenstelle mit dem erfassten Objekt mitzubewegen. Die weitere Gefahrenstelle wird vorzugsweise erzeugt, sobald das zugehörige erfasste Objekt erstmals in den Überwachungsbereich eintritt, alternativ auch erst dann, wenn es in einen bestimmten Teilbereich kommt. In beiden Fällen soll nicht nur die erste Position, sondern auch die weitere Bewegung des erfassten Objekts abgesichert werden, und dazu dient die dynamische, mitbewegte Gefahrenstelle. Die Mitbewegung lässt sich insbesondere durch Umschalten von Gefahrenstellen erreichen, wobei jeweils eine Gefahrenstelle für die aktuelle Position und mindestens eine andere Gefahrenstelle für die neue Position zuständig ist. Bei der Absicherung einer stationären Maschine genügen dagegen im Prinzip statische Gefahrenstellen. Auch hier kann ein Umschalten von Gefahrenstellen für verschiedene Arbeitsschritte oder Maschinenzustände innerhalb eines Prozessablaufs nützlich sein.

Der Überwachungssensor ist bevorzugt eine Kamera, insbesondere eine 3D-Kamera. Für die Abstandsmessung einer 3D-Kamera sind verschiedene Technologien bekannt, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera aber ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. In einer anderen bevorzugten Ausführungsform ist der Überwachungssensor ein Laserscanner, der im Verlauf seiner Scanbewegung Abstände mit einem Lichtlaufzeitverfahren misst und dem jeweiligen Abtastwinkel zuordnet. Diese Abtastebene kann durch zusätzliche Scanbewegung in Elevation oder mehrere in Elevation versetzte Abtaststrahlen zu einem dreidimensionalen Raumbereich erweitert werden, so dass der Laserscanner eine 3D-Punktewolke erzeugt wie eine 3D-Kamera.

Die Sensoranordnung weist bevorzugt mehrere Überwachungssensoren auf, die einander in ihren Überwachungsbereichen und/oder ihrer Perspektive ergänzen. Das können mehrere gleichartige Überwachungssensoren sein, wie eine Vielzahl von Stereokameras, aber auch hybride Anordnungen etwa mit Laserscannern und Kameras. Ein möglicher Vorteil mehrerer Überwachungssensoren ist, durch gegenseitige Ergänzung einen insgesamt größeren Überwachungsbereich zu erfassen, und unterschiedliche Perspektiven sind hilfreich, um Abschattungen zu minimieren. Durch redundante Überwachung ist auch denkbar, den einzelnen Überwachungssensor nicht sicher im Sinne der einleitend genannten Normen auszugestalten und die Sicherheit durch Redundanz zu erzielen. Um insbesondere kürzeste Abstände einfach zu berechnen, kann jeder Überwachungssensor für sich den kürzesten Abstand zu einer Gefahrenstelle bestimmen, und anschließend werden auf dieser Basis die global kürzesten Abstände gefunden. Auf diese Weise bleibt die Auswertung entkoppelt, parallelisierbar und gut handhabbar. Es ist aber auch eine Kombination zu einem früheren Zeitpunkt denkbar, etwa durch Fusion von 3D-Punktewolken.

Der Überwachungssensor ist bevorzugt für ein Detektionsvermögen ausgelegt, bei dem Objekte ab einer Mindestgröße sicher erfasst werden, wobei für die Bestimmung des kürzesten Abstands nur Objekte der Mindestgröße berücksichtigt sind. Das Detektionsvermögen ist eine spezifizierte Eignung eines im Sinne der einleitenden oder vergleichbarer Normen sicheren Sensors, Objekte einer Mindestgröße im gesamten Überwachungsbereich sicher zu erfassen. Die entsprechende Auslegung des Sensors betrifft seinen Aufbau, also seine Optik, seinen Lichtempfänger und weitere mögliche, noch nicht genannte Komponenten wie etwa eine Beleuchtung, und die sichere Auswertung. Das Detektionsvermögen schließt erst einmal nicht aus, dass auch kleinere Objekte erfasst werden. Für Objekte, die kleiner sind als die Mindestgröße, ist aber der Schutz nicht garantiert, beispielsweise wird ein Finger bei einem für Armschutz ausgelegten Sensor nicht sicher erfasst. Deshalb werden Objekte kleiner als die Mindestgröße möglicherweise mittels Filtern in der Auswertung ausgeschlossen. Es ist auch möglich, eine Mindestgröße oberhalb des Detektionsvermögens zu wählen, also eine an sich bereitgestellte Auflösung nicht auszunutzen. Als Zahlenbeispiele seien 10 mm für Fingerschutz oder im Bereich von 30-80 mm für den Schutz von Extremitäten genannt, insbesondere 55 mm für Oberarmschutz. Objekte, die kleiner sind als die Mindestgröße, kommen in dieser bevorzugten Ausführungsform weder als Person noch als mobile Maschine oder dergleichen in Betracht, für die eine weitere Gefahrenstelle erzeugt werden müsste.

Die Sensoranordnung weist bevorzugt eine Sicherheitssteuerung auf, in der zumindest ein Teil der Steuer- und Auswertungseinheit implementiert ist. Somit wird die Steuer- und Auswertungsfunktionalität in einen internen Teil innerhalb des Überwachungssensors und einen externen Teil in der Sicherheitssteuerung aufgeteilt. Beide Extreme mit ganz autarkem Überwachungssensor, der diese Funktionalität selbst aufweist und nur das sicherheitsgerichtete Signal ausgibt, oder einem lediglich rohe Messsignale liefernden Überwachungssensor sind vorstellbar. Eine besonders vorteilhafte Aufgabenverteilung sieht vor, dass der Überwachungssensor sichere Werte für die kürzesten Abstände zwischen erfassten Objekten und Gefahrenstellen bereitstellt und die Sicherheitssteuerung damit die sicherheitsrelevante Bewertung vornimmt und entscheidet, ob eine sicherheitsgerichtete Reaktion erforderlich ist. Beispiele für eine Absicherung sind ein Nothalt, ein Abbremsen, ein Ausweichen oder ein Verbringen in eine sichere Position. Die tatsächliche Absicherung erfolgt vorzugsweise durch die Maschinensteuerung, die im Übrigen in einer weiteren Ausführungsform ebenfalls die Funktionalität der Sicherheitssteuerung übernehmen kann.

Die Steuer- und Auswertungseinheit ist bevorzugt dafür ausgebildet, mit Hilfe der Erfassung durch den Überwachungssensor zu erkennen, ob zu einem erfassten Objekt eine weitere Gefahrenstelle erzeugt wird. Die Erkennung abzusichernder Objekte, insbesondere mobiler Maschinen, erfolgt somit aufgrund der Beobachtung aus Messdaten des Überwachungssensors selbst. Dadurch sind keine weiteren Vorrichtungen in der Sensoranordnung erforderlich, um Objekte zu identifizieren, für die eine weitere Gefahrenstelle erzeugt werden soll.

Die Steuer- und Auswertungseinheit identifiziert bevorzugt eine Kontur oder sonstige optisch erfassbare Struktur des erfassten Objekts. In einer Ausführungsform werden dazu bestimmte Konturen von mobilen Maschinen, wie Roboter oder autonomen Fahrzeugen (AGV, automated guided vehicle), eingelernt oder aus einer Datenbank abgerufen und zur Identifikation mit den erfassten Konturen verglichen. In einer anderen Ausführungsform werden typische Konturen durch allgemeine Eigenschaften oder funktionale Verläufe beschrieben und so wiedererkannt. Vorzugsweise wird die Identifikation durch eine spezifische optische erfassbare Struktur an dem zu erfassenden Objekt unterstützt. Das kann ein optischer Code im weiteren Sinne eine Farbmarkierung oder eine bestimmte 3D-Struktur sein, die an dem Objekt angebracht wird. Im engeren Sinne handelt es sich um einen 2D-Code oder Barcode, der ausgelesen wird.

Die Sensoranordnung umfasst bevorzugt einen Zusatzsensor, insbesondere einen optischen Codeleser oder einen RFID-Leser, wobei die Steuer- und Auswertungseinheit dafür ausgebildet ist, anhand von Daten des Zusatzsensors zu erkennen, ob zu einem erfassten Objekt eine weitere Gefahrenstelle erzeugt wird. Der Zusatzsensor erhöht zwar die Komplexität der Sensoranordnung, dafür ist der Zusatzsensor aber auf die Identifikation spezialisiert und kann beispielsweise als Barcodescanner oder kamerabasierter Codeleser einen optischen Code lesen, auch wenn die Auflösung des Überwachungssensors dafür nicht ausreicht. Im Falle eines RFID-Lesers, der auch ähnliche Übertragungsverfahren wie NFC (Near Field Communication) einschließen soll, wird die konkrete Identifikation durch Ausnutzen eines ganz anderen physikalischen Prinzips von der Überwachung entkoppelt. Eine weitere Alternative ist eine aktive Kommunikation der mobilen Maschine mit der Sensoranordnung über ein Drahtlosprotokoll oder eine übergeordnete Steuerung, die sowohl mit der mobilen Maschine als auch der Sensoranordnung verbunden ist. Es genügt dann aber nicht, dass die mobile Maschine sich über die Steuerung bei der Sensoranordnung anmeldet, sondern die Sensoranordnung überprüft mit Hilfe ihres Überwachungssensors, ob die mobile Maschine tatsächlich an der angegebenen Position in den Überwachungsbereich eintritt, damit die weitere Gefahrenstelle die Sicherheit für Personen im Überwachungsbereich tatsächlich gewährleistet.

Die Steuer- und Auswertungseinheit ist bevorzugt dafür ausgebildet, mit Hilfe der Erfassung durch den Überwachungssensor oder anhand von Daten eines Zusatzsensors ein erfasstes Objekt als zulässig zu erkennen, wobei ein zulässiges Objekt unabhängig von seiner Position bezüglich der Gefahrenstelle keine sicherheitsgerichtete Reaktion auslöst. In dieser Ausführungsform werden die erfassten Objekte weiter differenziert. Die Grundannahme ist, dass ein erfasstes Objekt eine Person ist. Manche Objekte werden als Gefahr identifiziert, und dafür wird eine weitere Gefahrenstelle erzeugt. Umgekehrt gibt es auch Objekte, die keine Gefahr darstellen, entweder weil eine Kollision einen Menschen nicht gefährden würde oder weil sie selbst für ihre eigene Absicherung sorgen. Solche Objekte sind im Überwachungsbereich zulässig und dürfen sich dort bewegen und auch einer überwachten stationären Maschine nähern. Selbst wenn es aufgrund einer Fehlsteuerung zu einer Kollision des an sich zulässigen Objekts mit der Maschine kommt, betrifft das nicht den Personenschutz, und damit fällt es nicht in die Zuständigkeit der Sensoranordnung. Die Zulässigkeit kann sich auf Teilbereiche des Überwachungsbereichs beschränken.

Die Steuer- und Auswertungseinheit ist bevorzugt dafür ausgebildet, eine Rückmeldung an das erfasste Objekt über das Erzeugen einer Gefahrenstelle auszugeben. Diese Rückmeldung kann ein Licht- oder Funksignal sein oder mittels einer übergeordneten Steuerung übertragen werden. Wenn das erfasste Objekt eine mobile Maschine, ein mobiler Roboter oder ein AGV ist, so erhält die Maschinensteuerung auf diese Weise eine Rückbestätigung, dass eine weitere Gefahrenstelle erzeugt ist und die Absicherung nun von der Sensoranordnung übernommen wird. Das kann eine Voraussetzung sein, dass die Maschinensteuerung die mobile Maschine weiter bewegt, oder sie verändert nun für die Dauer des Aufenthalts in dem Überwachungsbereich ihre eigene Absicherung, insbesondere durch Deaktivierung.

Die Steuer- und Auswertungseinheit ist bevorzugt dafür ausgebildet, zu einem erfassten Objekt nur an mindestens einer bestimmten Position im Überwachungsbereich eine Gefahrenstelle zu erzeugen. Die bestimmte Position stellt damit eine Art Zugangsschleuse dar. Die Identifikation nur an bestimmten Positionen kann damit verbunden sein, dass mobile Maschinen, die an anderer Stelle in den Überwachungsbereich eindringen, zu einer sicherheitsgerichteten Reaktion führen. Alternativ bleibt die mobile Maschine, welche die Zugangsschleuse nicht nutzt, voll für ihre eigene Absicherung verantwortlich. Die bestimmte Position ist ein besonders geeigneter Ort, um einen Zusatzsensor für die Identifikation zu montieren. Das Anfahren einer bestimmten Position, oder verallgemeinert das Eindringen in den Überwachungsbereich mit bestimmtem Bewegungsmuster, kann die Identifikation erleichtern, zu welchen erfassten Objekten eine weitere Gefahrenstelle erzeugt werden sollte.

Die Steuer- und Auswertungseinheit ist bevorzugt dafür ausgebildet, von dem erfassten Objekt Gefahrenstelleninformationen über die zu erzeugende Gefahrenstelle zu erhalten und/oder mit Hilfe des Überwachungssensors zu bestimmen. Die Gefahrenstelleninformationen unterstützen bei der geometrischen Auslegung der weiteren Gefahrenstelle sowie bei der Sicherheitsbewertung der Position weiterer erfasster Objekte bezüglich der weiteren Gefahrenstelle.

Die Gefahrenstelleninformationen umfassen bevorzugt mindestens eine der folgenden Informationen: eine binäre Information, dass eine Gefahrenstelle erzeugt werden soll, eine Position, eine Geschwindigkeit, eine bisherige oder voraussichtliche Bewegungsbahn oder eine Geometrie des Objekts. Die binäre Information ist ein Erkennungszeichen für erfasste Objekte, d. h. insbesondere mobile Maschinen, die einer eigenen Absicherung mittels weiterer Gefahrenstellen bedürfen. Die genannten Größen können abstrakt als Information, die beispielsweise aus einem optischen Code ausgelesen werden, und auch mit Hilfe von Messdaten des Überwachungssensors selbst bestimmt werden. Vorzugsweise geschieht beides, und es findet ein Abgleich statt, ob die übermittelten und die selbst wahrgenommenen Gefahrenstelleninformationen zueinander passen, worauf dann gegebenenfalls sicherheitsgerichtet reagiert werden kann. Die voraussichtliche Bewegungsbahn wird dabei aus der bisherigen Historie extrapoliert.

Die Gefahrenstelleninformationen umfassen bevorzugt mindestens eine der folgenden Informationen: eine geplante Bewegungsbahn, eine geplante Geschwindigkeit, einen geplanten Arbeitsschritt, ein zukünftig eingenommenes Volumen oder eine Gefahrenstellenkonfiguration. Hierbei handelt es sich um Informationen, die der Überwachungssensor selbst nicht erfassen kann und die typischerweise aus einer Spezifikation der mobilen Maschine oder deren Maschinensteuerung stammen. Eine geplante Bewegungsbahn kann unerwartet von der Extrapolation einer bisherigen Bewegungsbahn abweichen, ebenso wie ein plötzliches Beschleunigen oder Abbremsen sowie ein neuer Arbeitsschritt nicht immer im Vorhinein erkennbar ist. Der Sensoranordnung kann auch bereits die passende Gefahrenstellenkonfiguration als solche mitgeteilt werden, wobei dafür auch Parameter ausreichen können, die eine Gefahrenstellenkonfiguration festlegen oder erleichtern. Es gibt mobile Maschinen, die in einem Sicherheitsmodus mit reduzierter Geschwindigkeit oder reduziertem Arbeitsbereich arbeiten, und dann kann es sinnvoll sein, der Sensoranordnung mitzuteilen, dass die mobile Maschine sich in diesem Sicherheitsmodus befindet beziehungsweise welchen konkreten Beschränkungen sie deshalb unterliegt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereichs;
- Fig. 2: eine beispielhafte Überwachungssituation mit mehreren Gefahrenstellen und Objekten;
- Fig. 3: eine schematische Darstellung der Überwachung einer statischen Gefahrenstelle;
- Fig. 4: eine schematische Darstellung der Überwachung einer mobilen Gefahrenstelle, die für eine sich in den Überwachungsbereich bewegende Maschine erzeugt wird; und
- Fig. 5: eine schematische Darstellung ähnlich Figur 5 mit einer skizzierten Bewegung der Maschine und der mobilen Gefahrenstelle durch den Überwachungsbereich.

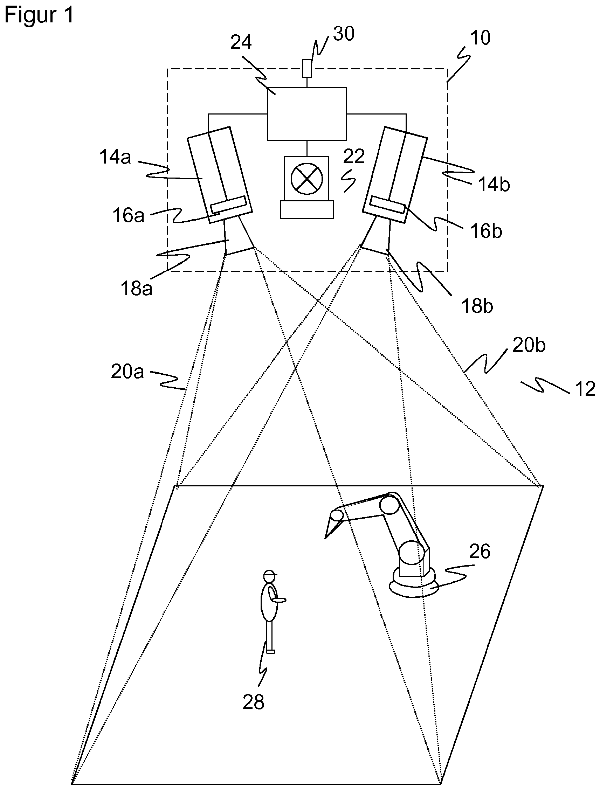

Figur 1 zeigt in einer schematischen dreidimensionalen Darstellung den allgemeinen Aufbau einer Stereokamera zur Aufnahme einer Tiefenkarte. Die Stereokamera ist nur ein Beispiel für einen Überwachungssensor 10, an dem die Objekterfassung in dem besonders vorteilhaften Fall einer dreidimensionalen Raumüberwachung erläutert wird. Ebenso denkbar wären die einleitend genannten anderen 3D-Kameras, und als weitere Alternative andere optoelektronische Sensoren wie 2D-Kameras oder Laserscanner.

Zur Erfassung eines Überwachungs- oder Raumbereichs 12 sind zwei Kameramodule 14a, 14b in einem bekannten festen Abstand zueinander montiert und nehmen jeweils Bilder des Raumbereichs 12 auf. In jedem Kameramodul 14a, 14b ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Die beiden Bildsensoren 16a, 16b bilden gemeinsam einen 3D-Bildsensor oder Lichtempfänger zur Erfassung einer Tiefenkarte. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die sich bevorzugt in dem Überwachungssensor 10 befinden, die aber auch beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 kann über eine Konfiguration eingeschränkt werden, beispielsweise um störende oder nicht notwendige Bereiche auszublenden.

Eine wichtige sicherheitstechnische Anwendung des Überwachungssensors 10 ist die Überwachung einer Maschine 26, die in der Figur 1 durch einen Roboter symbolisiert ist. Der Überwachungssensor 10 ist dafür vorzugsweise fehlersicher im Sinne von Sicherheitsnormen wie den einleitend genannten ausgelegt. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Es wird überwacht, ob Objekte 28, dargestellt als Person, durch die Maschine 26 gefährdet sind und eine entsprechende sicherheitsgerichtete Reaktion erfolgen muss, beispielsweise die Maschine 26 anhält, abbremst oder ausweicht. Dazu weist der Überwachungssensor 10 eine sichere Schnittstelle 30 auf, über die entsprechende Reaktionen ausgelöst oder für eine Sicherheitsbewertung erforderliche Überwachungsgrößen ausgegeben werden, entweder direkt an die Maschine 26 oder an eine Zwischenstation, wie eine sichere Steuerung.

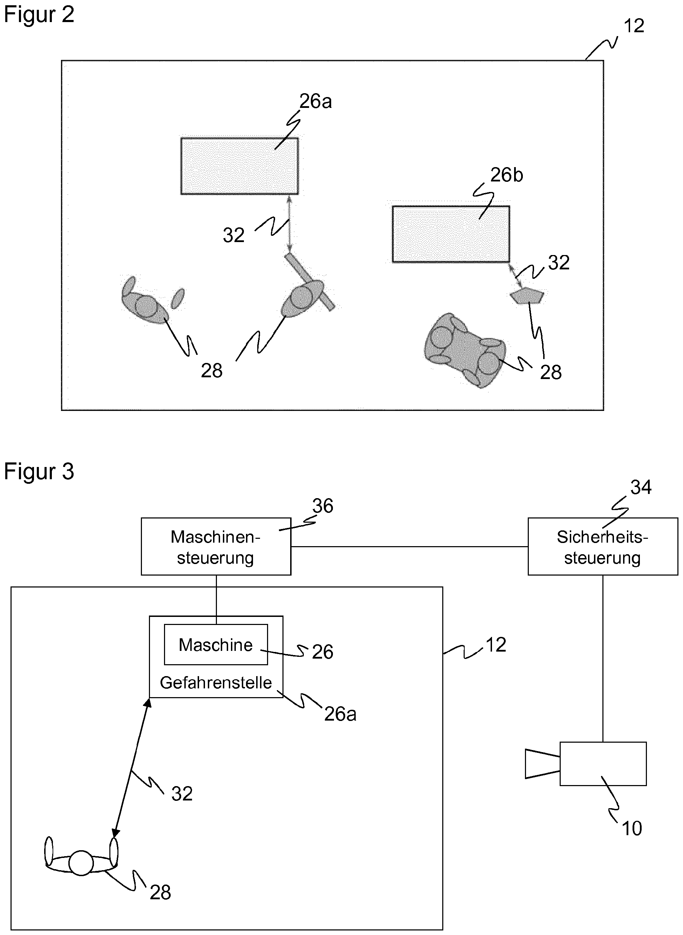

Figur 2 zeigt eine beispielhafte Überwachungssituation in dem Raumbereich 12. Anhand dieser Überwachungssituation soll eine besonders vorteilhafte Sicherheitsbewertung auf Basis einer Abstandsüberwachung erläutert werden. In dem Beispiel der Figur 2 befinden sich in dem Raumbereich 12 mehrere Gefahrenstellen 26a, 26b und Objekte 28. Eine Gefahrenstelle 26a, 26b ist eine bevorzugte Modellierung der gefahrbringenden Maschine 26 und beschreibt den potentiell für den Menschen gefährlichen Bereich als Volumen im Raum. Beispielsweise ist eine Gefahrenstelle 26a, 26b der Raumbereich, in dem die Maschine 26 in einem jeweiligen Zeitabschnitt Arbeitsbewegungen ausführt, oder noch allgemeiner ein Raumbereich, der die Maschine 26 absichert, sei es weil die Maschine 26 davon zumindest teilweise umgeben ist oder weil die Gefahrenstelle 26a, 26b den Zugang zu der Maschine 26 sperrt. Die Gefahrenstelle 26a, 26b kann die Maschine 26 mit etwas Abstand umgeben, um den Arbeitsbewegungen ausreichend Spiel zu lassen.

Mehrere Gefahrenstellen 26a, 26b können parallel aktiv sein. Sie modellieren beispielsweise mehrere Maschinen 26 und/oder mehrere bewegliche Teilabschnitte einer Maschine 26. Gefahrenstellen 26a, 26b können starr sein und sämtliche denkbaren Arbeitsbewegungen umfassen. Alternativ sind jeweils Gefahrenstellen 26a, 26b für Teilabschnitte der Arbeitsbewegung definiert, die in einer dem Prozess entsprechenden Abfolge benutzt werden und die kleiner und besser angepasst sind. Gefahrenstellen 26a, 26b können durch einen Einrichter, gegebenenfalls je Prozessschritt, in einem entsprechenden Softwarewerkzeug vorkonfiguriert werden, auch halb- oder vollautomatisch durch Beobachten der Arbeitsabläufe, oder beispielsweise dynamisch von einer Steuerung der Maschine 26 übernommen werden.

Objekte 28 sind meist als Personen gezeigt, weil es um den Personenschutz geht, wobei aber der Überwachungssensor 10 vorzugsweise nicht unterscheidet, ob ein Objekt 28 eine Person ist, oder jedenfalls nur anhand von einfachen Kriterien wie Mindestgrößen. Einfache oder komplexe Körpermodelle sind andererseits auch nicht ausgeschlossen. Die Steuer- und Auswertungseinheit 24 erfasst die Objekte 28 mit Hilfe der Tiefenkarte. Eine mögliche Repräsentation ist eine sogenannte Detektionstiefenkarte, deren Pixel einen Abstandswert enthalten, wo immer an der jeweiligen lateralen Position ein gültiges Objekt 28 erkannt wurde, und die sonst leer bleibt. Gültig bedeutet in diesem Zusammenhang, dass das Objekt 28 auch nach Filterungen mit einer Mindestgröße, einem Körpermodell, einem Zusammenhang mit einem grob erfassten Objekt wie in EP 3 200 122 A1 oder dergleichen noch als relevant betrachtet wird.

Im Beispiel der Figur 2 sind zwei Gefahrenstellen 26a, 26b zu überwachen, und derzeit sind von dem Überwachungssensor 10 in deren Umgebung vier Objekte 28 erkannt. Zwei der Objekte 28 sind, ohne dass der Überwachungssensor 10 diese Information explizit gewinnen muss, einzelne Personen, ein weiteres Objekt 28 besteht aus zwei miteinander verschmolzenen Personen, sei es weil sie zusammen ein Werkstück tragen und so tatsächlich verbunden sind oder weil die Segmentierung die beiden Personen nicht trennen konnte. Hinzu kommt noch ein Objekt 28, das nicht näher identifizierbar ist und das ein Gegenstand oder eine Fehlerfassung sein könnte. Fällt es unter die Mindestgröße, so kann es ignoriert werden, ansonsten muss es vorsichtshalber als Person interpretiert werden. Der nicht verbundene Arm der Person ganz links bildet je nach Auswertung ein eigenes weiteres Objekt, oder er wird, insbesondere nach der Lehre der EP 3 200 122 A1, der Person zugeordnet.

Die Steuer- und Auswertungseinheit 24 berechnet kontinuierlich den kürzesten Abstand des einer jeweiligen Gefahrenstelle 26a, 26b nächsten Objekts 28. Dazu müssen im Prinzip alle Objektpunkte betrachtet werden. Vorzugsweise wird die Tiefenkarte vorgefiltert und enthält nur noch die detektierten Objekte, beziehungsweise es wird eine oben kurz eingeführte Detektionskarte verwendet, die nur die Entfernungen der relevanten Objekte zu dem Überwachungssensor 10 enthält.

In Figur 2 sind Pfeile 32 eingezeichnet, welche in der aktuellen Situation die kürzesten Abstände bezüglich der Gefahrenstellen 26a, 26b darstellen. Der kürzeste Abstand verbindet den nächsten Punkt einer Gefahrenstelle 26a, 26b mit dem nächsten Punkt des nächsten Objekts 28. Bei dieser Darstellung ist angenommen, dass das kleine Objekt 28 rechts unten in Figur 2 die Mindestgröße überschreitet. Andernfalls würde es ignoriert und stattdessen der Abstand zu den beiden verschmolzenen Personen ausgegeben, die das zweitnächste Objekt 28 bilden. Zu beachten ist, dass die zweidimensionale Ansicht der Figur 2 das Bestimmen der kürzesten Abstände vereinfacht. Tatsächlich sind dreidimensionale Abstände zwischen dreidimensionalen Gefahrenstellen 26a, 26b und Objekten 28 zu bestimmen, und dabei sind auch deren projektiven Schatten zu berücksichtigen, in denen ein weiteres Objekt 28 dem Überwachungssensor 10 verborgen bleiben könnte.

Der jeweils zuletzt bezüglich einer Gefahrenstelle 26a, 26b ermittelte kürzeste Abstand des dieser Gefahrenstelle 26a, 26b nächsten Objekts 28 wird zyklisch oder azyklisch je nach geforderter und möglicher Ansprechzeit des Überwachungssensors 10 an der sicheren Schnittstelle 30 bereitgestellt, und zwar vorzugsweise unterscheidbar je Gefahrenstelle 26a, 26b. Eine an die sichere Schnittstelle 30 angeschlossene Steuerung, sei es eine übergeordnete Steuerung oder diejenige der Maschine 26, wertet den kürzesten Abstand aus und plant erforderlichenfalls abhängig von dem kürzesten Abstand den nächsten Arbeitsschritt neu. Im Gefährdungsfall wird eine sicherheitsgerichtete Reaktion eingeleitet, sodass durchgehend der erforderliche Sicherheitsabstand zwischen Mensch und Maschine gewahrt bleibt. Ob dies erforderlich ist, kann neben dem kürzesten Abstand von weiteren Bedingungen, wie den Geschwindigkeiten oder der Beschaffenheit von Objekt 28 und Maschinenbereich 26, der drohenden Kollision abhängen, wofür je nach Ausführungsform weitere Größen mit dem kürzesten Abstand ausgegeben werden.

Figur 3 illustriert die Überwachung einer Gefahrenstelle 26a zu einer stationären Maschine 26. Innerhalb des Raumbereichs 12 entspricht die Darstellung der Figur 2, die nur der Übersichtlichkeit halber dahingehend vereinfacht ist, dass es nur eine Gefahrenstelle 26a und nur ein Objekt 28 gibt, nämlich einen Werker, der den Raumbereich 12 betreten hat. Der Überwachungssensor 10 überwacht den Raumbereich 12, wobei alternativ auch eine Anordnung mehrerer Überwachungssensoren 10 vorgesehen sein kann, um den überwachbaren Raumbereich 12 zu vergrößern und/oder Abschattungen zu minimieren, wobei vorzugsweise zumindest ein Überwachungssensor 10 eine Perspektive von oben einnimmt.

Vorzugsweise in der zu Figur 1 und 2 beschriebenen Weise erfasst der Überwachungssensor 10 Objekte 28 in dem Raumbereich 12 und berechnet den durch den Pfeil 32 illustrierten kürzesten Abstand zu der Gefahrenstelle 26a. Die kürzesten Abstände werden an eine Sicherheitssteuerung 34 ausgegeben, die ihrerseits mit einer Maschinensteuerung 36 der Maschine 36 verbunden ist. In der Sicherheitssteuerung 34 werden die kürzesten Abstände sicherheitsgerichtet ausgewertet. In diese Bewertung können auch von der Maschinensteuerung 36 bereitgestellte Prozessdaten einfließen. Die Sicherheitssteuerung 34 kann Informationen zu der Gefahrenstelle 26a an den Überwachungssensor 10 übermitteln. Es ist denkbar, dass diese Informationen zumindest teilweise von der Maschinensteuerung 36 stammen, wobei die Maschine 26 auch eigene Sensoren aufweisen kann. Vorzugsweise sind die Gefahrenstellen 26a in dem Überwachungssensor 10 vorkonfiguriert, und zur Laufzeit übermittelte Informationen betreffen beispielsweise nur noch eine Umschaltung von Gefahrenstellen 26a für einen neuen Arbeitsschritt der Maschine 26.

Ergibt die Sicherheitsbewertung, dass das Objekt 28 bezüglich der Gefahrenstelle 26a eine gefährliche Position einnimmt, so erzeugt die Sicherheitssteuerung 34 ein sicheres Ausgabesignal für die Maschinensteuerung 36. Deren sicherheitsgerichtete Reaktion kann das Risiko je nach Situation durch verringerte Bewegungsgeschwindigkeit, Ausweichen, Umplanen des folgenden Arbeitsschrittes oder als letztes Mittel einen Nothalt mindern.

Die Auswertungs- und Steuerungsfunktionalität kann auch anders auf Überwachungssensor 10, Sicherheitssteuerung 34 und Maschinensteuerung 36 verteilt sein, insbesondere indem die Funktionalität der Sicherheitssteuerung 34 zumindest teilweise in den Überwachungssensor 10 oder in die Maschinensteuerung 36 integriert ist, wobei in den Extremfällen einer vollständigen Übernahme von deren Funktionalität auf die Sicherheitssteuerung 34 sogar ganz verzichtet werden kann. Die Sicherheitssteuerung 34 kann auch als Teil einer übergeordneten Steuerung aufgefasst werden, die für den gesamten Arbeitsbereich zuständig ist, etwa eine Roboterzelle, zu dem der überwachte Raumbereich 12 gehört.

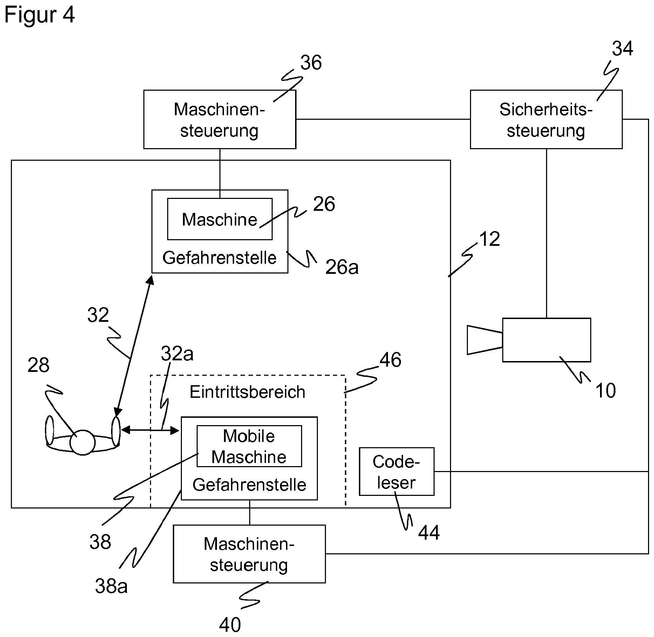

Figur 4 zeigt eine Situation ähnlich Figur 3, wobei jedoch von dem Überwachungssensor 10 zusätzlich ein besonderes Objekt erfasst wurde, das in den Raumbereich eingetreten ist, nämlich eine mobile Maschine 38. Die mobile Maschine 38 steht stellvertretend für ein neu in den Raumbereich 12 eintretendes Objekt, das selbst eine Gefahr darstellt, zu der Personen einen Sicherheitsabstand einhalten müssen. Die mobile Maschine 38 weist eine eigene Maschinensteuerung 40 auf, die beispielsweise drahtlos mit der Sicherheitssteuerung 34 verbunden ist. Erfindungsgemäß wird die mobile Maschine 38 erkannt, und es wird eine weitere Gefahrenstelle 38a für die mobile Maschine 38 erzeugt, um sie während ihrer Bewegung durch den Raumbereich 12 abzusichern.

Die weitere Gefahrenstelle 38a wird von dem Überwachungssensor 10 ebenso überwacht wie die bereits erläuterten Gefahrenstellen 26a-b. Der Unterschied ist, dass die weitere Gefahrenstelle 38a erst dann dynamisch erzeugt oder aktiviert wird, sobald eine mobile Maschine 38 erfasst wurde, die abgesichert werden soll. Folglich wird auch zu der weiteren Gefahrenstelle 38a der kürzeste Abstand zu den sonstigen erfassten Objekten 28 bestimmt, wie mit einem Pfeil 32a illustriert. Wird ein Objekt 28 in gefährlicher Position zu der weiteren Gefahrenstelle 38a erfasst, so wird über die Maschinensteuerung 40 eine sicherheitsgerichtete Reaktion der mobilen Maschine 38 eingeleitet.

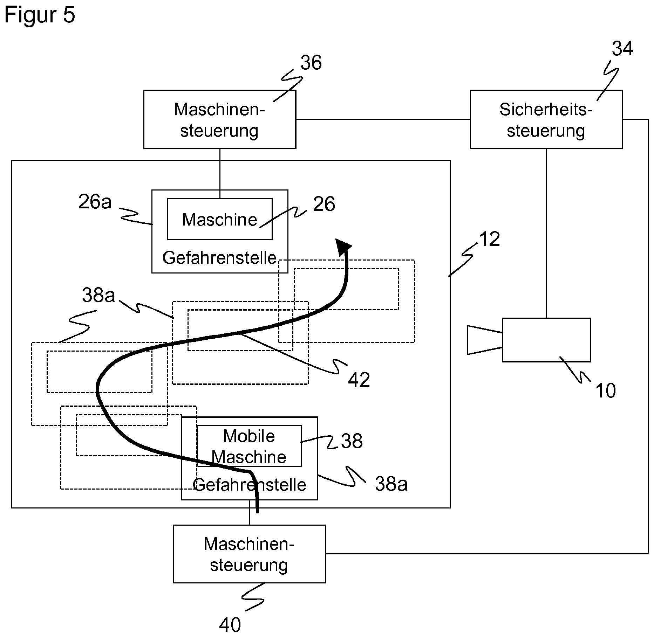

Die weitere Gefahrenstelle 38a wird vorzugsweise mit der mobilen Maschine 38 mitbewegt. Dies ist in Figur 5 illustriert. Die mobile Maschine 38 bewegt sich auf der beispielhaft eingezeichneten Bewegungsbahn 42. Die weitere Gefahrenstelle 38a folgt der Bewegungsbahn mit der mobilen Maschine 38, wie mit gestrichelten Linien für einige Positionen der mobilen Maschine 38 eingezeichnet. Die Mitbewegung der weiteren Gefahrenstelle 38a lässt sich insbesondere dadurch erreichen, dass jeweils eine zusätzliche Gefahrenstelle 38a an einer neuen Position der mobilen Maschine 38 aktiviert wird, wobei dann die bisherige Gefahrenstelle 38a nach Übergabe an die zusätzliche Gefahrenstelle 38a aufgelöst oder deaktiviert wird. Bei einer solchen Kette aufeinanderfolgender Gefahrenstellen 38a ist darauf zu achten, dass der von einer zusätzlichen Gefahrenstelle 38a eingenommene Raumbereich frei von Objekten 28 ist. Ansonsten sollte sich einerseits die mobile Maschine 38 dort nicht hinbewegen. Außerdem werden vorzugsweise innerhalb einer Gefahrenstelle 38a keine Objekte 28 erfasst, was nur zulässig ist, wenn im Vorfeld die Objektfreiheit sichergestellt wurde.

Zurück zu Figur 4, soll nun erläutert werden, wie entschieden wird, ob ein eindringendes Objekt eine potentielle Person 28 oder eine mobile Maschine 38 ist und ob dementsprechend eine weitere Gefahrenstelle 38a eingerichtet wird. Dazu wird ein erfasstes Objekt erkannt. Das kann eine individuelle Identifikation sein, eine Klassifikation eines Objekttyps, das beispielsweise als Roboter oder AGV erkannt wird, oder eine Erkennung aufgrund von allgemeinen Eigenschaften wie Größe und Geschwindigkeit unter heuristischen Annahmen der Art, dass ein großes, schnelles Objekt eine Gefahr darstellt. Solange allerdings das Objekt nicht identifiziert ist, sind die möglichen sicherheitsgerichteten Reaktionen äußerst beschränkt, beispielsweise auf eine Warnung, weil es sonst keine Einflussmöglichkeiten auf das Verhalten des Objekts gibt.

Die Identifikation kann auf optischen Merkmalen basieren. Ein Beispiel dafür ist eine Konturerfassung, wobei eine vermessene Kontur eines Objekts mit einer bekannten Kontur oder bekannten Kontureigenschaften verglichen wird. Andererseits kann eine mobile Maschine 38 auch eigens mit optischen Merkmalen versehen werden. Dafür sind unter anderem Farbmerkmale, gut erfassbare und unterscheidbare 3D-Strukturen oder optische Codierungen vorstellbar.

Der Überwachungssensor 10 selbst ist eine Möglichkeit, optische Merkmale zu erfassen. Wegen des häufig relativ großen Arbeitsabstands von mehreren Metern wird in einer bevorzugten Ausführungsform mindestens ein Zusatzsensor 44 angebracht, der ebenfalls mit der Sicherheitssteuerung 34 verbunden ist und optische Merkmale aus einer geeigneteren oder jedenfalls zusätzlichen Perspektive erfasst. Besonders bevorzugt handelt es sich um einen Barcodescanner oder kamerabasierten Codeleser. Ein Zusatzsensor 44 kann aber auch ganz andere Merkmale auswerten als optische Merkmale, beispielsweise als RFID-Leser ausgebildet sein und mit einem RFID-Tag der mobilen Maschine kommunizieren. Die Identifikation kann auch durch insbesondere drahtlosen Informationsaustausch zwischen der Maschinensteuerung 40 und der Sicherheitssteuerung 34 erfolgen oder unterstützt werden. Wie alle sicherheitsrelevante Kommunikation erfolgt dies vorzugsweise über sichere Protokolle.

Die Identifikation wird deutlich vereinfacht, wenn mindestens ein fester Eintrittsbereich 46 vereinbart ist, über den mobile Maschinen 38 in den Raumbereich 12 eindringen. Es genügt, die Identifikation einmalig vorzunehmen und dann während des Aufenthalts der mobilen Maschine 38 in dem Raumbereich 12 beizubehalten. Gegebenenfalls wird das zyklisch, an bestimmten Positionen oder in bestimmten Situationen nachgeprüft, etwa wenn die Objekttrennung nicht mehr eindeutig möglich ist. Der Eintrittsbereich 46 ermöglicht auch eine besonders geeignete Montageposition für einen Zusatzsensor 44.

Bei der ersten Erfassung einer mobilen Maschine 38 geht es zunächst darum, überhaupt zu erkennen, dass eine weitere Gefahrenstelle 38a erzeugt werden soll. Es können aber zugleich hilfreiche Gefahrenstelleninformationen gewonnen werden. Manche der Gefahrenstelleninformationen lassen sich wahlweise mittels Überwachungssensor 10 messen oder übermitteln, wobei die Übermittlung beispielsweise durch Auslesen optischer Codes oder RFID-Tags beziehungsweise durch Kommunikation mit der Maschinensteuerung 40 erfolgt. Das sind optisch erfassbare Gefahrenstelleninformationen wie Position, Bewegungsrichtung, Geschwindigkeit, bisherige Bewegungsbahn oder Objektgeometrie. Für höhere Sicherheitsanforderungen ist es sinnvoll, solche Gefahrenstelleninformationen redundant sowohl selbst zu erfassen als auch zu übermitteln und dann die Selbstüberwachung und die übermittelte Erwartung miteinander abzugleichen.

Weitere denkbare Gefahrenstelleninformationen können durch Verknüpfung mit Vorwissen beispielsweise aus einer Datenbank aus einer Identifizierung der mobilen Maschine 38 gewonnen werden, etwa deren genaue Abmessungen und Geometrie, maximale Reichweiten und Geschwindigkeiten und möglicherweise auch der geplante Prozess. Von der Maschinensteuerung 40 können auch dynamische Gefahrenstelleninformationen übermittelt werden, wie die aktuell geplante Bewegung, die geplanten Arbeitsschritte und besondere Arbeitsmodi, die spezifizierte Bewegungsparameter wie die maximale Geschwindigkeit verändern. Möglicherweise umfasst die mobile Maschine 40 auch eine eigene Sensorik, deren Daten von der Maschinensteuerung 40 ausgewertet beziehungsweise übermittelt werden.

Auf Basis der Gefahrenstelleninformationen, soweit ermittelt beziehungsweise erfasst, wird die weitere Gefahrenstelle 38a dann ausgelegt. Typische Einflussgrößen für die Auslegung der weiteren Gefahrenstelle 38a und der Sicherheitsabstände sind die Bewegungsvektoren des Objekts 28 und der mobilen Maschine 38. Besonders einfach ist die Festlegung einer weiteren Gefahrenstelle 38a, wenn die Gefahrenstelleninformationen bereits die benötigte Gefahrenstellenkonfiguration als solche enthalten. Das Verhalten der mobilen Maschine 38 ist prinzipiell bekannt, so dass auch vorab oder durch die Maschinensteuerung 40 festgelegt werden kann, wie sie am besten durch eine Gefahrenstelle 38a repräsentiert wird. Wie schon bei der Mitbewegung der weiteren Gefahrenstelle 38a zu Figur 5 erläutert, wird vorzugsweise eine weitere Gefahrenstelle 38a nur in einem Bereich eingerichtet, in dem sich außer der mobilen Maschine 38 kein Objekt befindet.

Insgesamt ist so erfindungsgemäß der Schutz des Werkers auch in der zaunlosen Fertigung mit mobilen Maschinen 38 ermöglicht. Die mobilen Maschinen 38 stellen neue Gefahren dar, die aber durch die jeweilige weitere Gefahrenstelle 38a angemessen abgesichert werden. Im Übrigen ist denkbar, in Abweichung von Figur 4 keine stationäre Maschine 26 vorzusehen. Die Sensoranordnung überwacht dann den Raumbereich 12 und führt eine Abstandsbewertung und Absicherung immer nur dann durch, wenn sich mindestens eine mobile Maschine 38 in dem Raumbereich 12 befindet. Eine besondere Form der mobilen Maschine 38 ist ein mobiler Roboter, der sich nicht selbst bewegt, sondern auf einer beweglichen Plattform montiert ist. Dessen Bewegung lässt sich dann in eine Grundbewegung der Plattform und die Bewegung des Roboters bezüglich der Plattform aufteilen. An den Prinzipien der Absicherung mittels einer weiteren Gefahrenstelle 38a ändert das nichts, außer, dass die weitere Gefahrenstelle 38a etwas großzügiger bemessen wird und eventuell in der Sicherheitsbewertung größere Abstände zwischen Objekt 28 und weiterer Gefahrenstelle 38a gefordert werden.

Unabhängig von der konkreten Konfiguration von stationären Maschinen 26 und mobilen Maschinen 38 wird jede am Prozess beteiligte Maschine unter Berücksichtigung und Verarbeitung der bereitgestellten Daten sicherheitsgerichtet gesteuert und überwacht. In einem denkbaren zusätzlichen Schritt wird auch der Werker durch eine Personenerkennung sicher identifiziert. Damit unterbleiben Fehlreaktionen auf Objekte, die gar keine Personen sind, und die Risikobewertung wird noch zielgerichteter und genauer.

## Patentansprüche

1. Sensoranordnung zum Absichern eines Überwachungsbereichs (12) mit mindestens einer Gefahrenstelle (26a, 26b, 38a) zu einer Maschine (26, 38), wobei die Sensoranordnung mindestens einen optoelektronischen Überwachungssensor (10) zur Erfassung von Objekten (28, 38) in dem Überwachungsbereich (12) sowie eine Steuer- und Auswertungseinheit (24, 34) aufweist, die dafür ausgebildet ist, die Position erfasster Objekte (28) mit der Gefahrenstelle (26a, 26b, 38a) zu vergleichen und im Falle einer gefährlichen Position eine sicherheitsgerichtete Reaktion der Maschine (26, 38) einzuleiten,
**dadurch gekennzeichnet,**
**dass** die Steuer- und Auswertungseinheit (24, 34) weiterhin dafür ausgebildet ist, während eines Arbeitsablaufs zu einem erfassten Objekt (38) eine weitere Gefahrenstelle (38a) zu erzeugen und zu überwachen.

2. Sensoranordnung nach Anspruch 1,
wobei der Vergleich der Position erfasster Objekte (28) mit einer Gefahrenstelle (26a, 26b, 38a) die Bestimmung eines kürzesten Abstands eines Objekts (28) zu der Gefahrenstelle (26a, 26b, 38a) aufweist.

3. Sensoranordnung nach Anspruch 1 oder 2,
wobei die Steuer- und Auswertungseinheit (24, 34) dafür ausgebildet ist, die weitere Gefahrenstelle (38a) als eine dynamische Gefahrenstelle (38a) mit dem erfassten Objekt (38) mitzubewegen.

4. Sensoranordnung nach einem der vorhergehenden Ansprüche,
wobei der Überwachungssensor (10) eine Kamera, insbesondere eine 3D-Kamera ist.

5. Sensoranordnung nach einem der vorhergehenden Ansprüche,
die eine Sicherheitssteuerung (34) aufweist, in der zumindest ein Teil der Steuer- und Auswertungseinheit (24, 34) implementiert ist.

6. Sensoranordnung nach einem der vorhergehenden Ansprüche,
wobei die Steuer- und Auswertungseinheit (24, 34) dafür ausgebildet ist, mit Hilfe der Erfassung durch den Überwachungssensor (10) zu erkennen, ob zu einem erfassten Objekt (28, 38) eine weitere Gefahrenstelle (38a) erzeugt wird.

7. Sensoranordnung nach einem der vorhergehenden Ansprüche,
wobei die Steuer- und Auswertungseinheit (24, 34) eine Kontur oder sonstige optisch erfassbare Struktur des erfassten Objekts (28, 38) identifiziert.

8. Sensoranordnung nach einem der vorhergehenden Ansprüche,
die einen Zusatzsensor (44) umfasst, insbesondere einen optischen Codeleser oder einen RFID-Leser, und wobei die Steuer- und Auswertungseinheit (24, 34) dafür ausgebildet ist, anhand von Daten des Zusatzsensors (44) zu erkennen, ob zu einem erfassten Objekt (28, 38) eine weitere Gefahrenstelle (38a) erzeugt wird.

9. Sensoranordnung nach einem der vorhergehenden Ansprüche,
wobei die Steuer- und Auswertungseinheit (24, 34) dafür ausgebildet ist, mit Hilfe der Erfassung durch den Überwachungssensor (10) oder anhand von Daten eines Zusatzsensors (44) ein erfasstes Objekt als zulässig zu erkennen, wobei ein zulässiges Objekt unabhängig von seiner Position bezüglich der Gefahrenstelle (26a, 26b, 38a) keine sicherheitsgerichtete Reaktion auslöst.

10. Sensoranordnung nach einem der vorhergehenden Ansprüche,
wobei die Steuer- und Auswertungseinheit (24, 34) dafür ausgebildet ist, eine Rückmeldung an das erfasste Objekt (38) über das Erzeugen einer Gefahrenstelle (38a) auszugeben.

11. Sensoranordnung nach einem der vorhergehenden Ansprüche,
wobei die Steuer- und Auswertungseinheit (24, 34) dafür ausgebildet ist, zu einem erfassten Objekt (38) nur an mindestens einer bestimmten Position (46) im Überwachungsbereich (12) eine Gefahrenstelle (38a) zu erzeugen.

12. Sensoranordnung nach einem der vorhergehenden Ansprüche,
wobei die Steuer- und Auswertungseinheit (24, 34) dafür ausgebildet ist, von dem erfassten Objekt (38) Gefahrenstelleninformationen über die zu erzeugende Gefahrenstelle (38a) zu erhalten und/oder mit Hilfe des Überwachungssensors (10) zu bestimmen.

13. Sensoranordnung nach Anspruch 12,
wobei die Gefahrenstelleninformationen mindestens eine der folgenden Informationen umfassen: eine binäre Information, dass eine Gefahrenstelle (38a) erzeugt werden soll, eine Position, eine Geschwindigkeit, eine bisherige oder voraussichtliche Bewegungsbahn (42) oder eine Geometrie des erfassten Objekts (38).

14. Sensoranordnung nach Anspruch 12 oder 13,
wobei die Gefahrenstelleninformationen mindestens eine der folgenden Informationen umfassen: eine geplante Bewegungsbahn (42), eine geplante Geschwindigkeit, einen geplanten Arbeitsschritt, ein zukünftig eingenommenes Volumen oder eine Gefahrenstellenkonfiguration.

15. Verfahren zum Absichern eines Überwachungsbereichs (12) mit mindestens einer Gefahrenstelle (26a, 26b, 38a) zu einer Maschine (26, 38), wobei Objekte (28, 38) in dem Überwachungsbereich (12) erfasst und die Positionen erfasster Objekte (28) mit der Gefahrenstelle (26a, 26b, 38a) verglichen werden, um im Falle einer gefährlichen Position eine sicherheitsgerichtete Reaktion der Maschine (26, 38) einzuleiten,
**dadurch gekennzeichnet,**
**dass** zu einem erfassten Objekt (38) eine weitere Gefahrenstelle (38a) erzeugt und überwacht wird.

## Claims

1. A sensor arrangement for safeguarding a monitored area (12) having at least one hazard zone (26a, 26b, 38a) with respect to a machine (26, 38), the sensor arrangement comprising at least one optoelectronic monitoring sensor (10) for detecting objects (28, 38) in the monitored area (12) and a control and evaluation unit (24, 34) which is configured to compare the position of detected objects (28) with the hazard zone (26a, 26b, 38a) and, in the event of a dangerous position, to initiate a safety-related response of the machine (26, 38),
**characterized in that** the control and evaluation unit (24, 34) is also configured to generate and monitor, during operation, a further hazard zone (38a) with respect to a detected object (38).

2. The sensor arrangement according to claim 1,
wherein the comparison of the position of detected objects (28) with a hazard zone (26a, 26b, 38a) comprises determining a shortest distance of an object (28) to the hazard zone (26a, 26b, 38a).

3. The sensor arrangement according to claim 1 or 2,
wherein the control and evaluation unit (24, 34) is configured to move the further hazard zone (38a) along with the detected object (38) as a dynamic hazard zone (38a).

4. The sensor arrangement according to one of the preceding claims,
wherein the monitoring sensor (10) is a camera, in particular a 3D camera.

5. The sensor arrangement according to one of the preceding claims,
which has a safety controller (34) in which at least part of the control and evaluation unit (24, 34) is implemented.

6. The sensor arrangement according to one of the preceding claims,
wherein the control and evaluation unit (24, 34) is configured to detect, with the aid of the detection by the monitoring sensor (10), whether a further hazard zone (26a, 26b, 38a) is generated with respect to a detected object (28, 38).

7. The sensor arrangement according to any of the foregoing claims,
wherein the control and evaluation unit (24, 34) identifies a contour or other optically detectable structure of the detected object (28, 38).

8. The sensor arrangement according to one of the preceding claims,
which comprises an additional sensor (44), in particular an optical code reader or an RFID reader, and wherein the control and evaluation unit (24, 34) is configured to detect, on the basis of data from the additional sensor (44), whether a further hazard zone (26a, 26b, 38a) is generated with respect to a detected object (28, 38).

9. The sensor arrangement according to one of the preceding claims,
wherein the control and evaluation unit (24, 34) is configured to recognize a detected object (28, 38) as permissible with the aid of the detection by the monitoring sensor (10) or on the basis of data from an additional sensor (44), wherein a permissible object (28, 38) does not trigger a safety-related response irrespective of its position relative to the hazard zone (26a, 26b, 38a).

10. The sensor arrangement according to one of the preceding claims,
wherein the control and evaluation unit (24, 34) is configured to output a feedback about the generation of a hazard zone (26a, 26b, 38a) to the detected object (28, 38).

11. The sensor arrangement according to one of the preceding claims,
wherein the control and evaluation unit (24, 34) is configured to generate a hazard zone (26a, 26b, 38a) with respect to a detected object (28, 38) only at at least one specific position (46) in the monitoring area (12).

12. The sensor arrangement according to one of the preceding claims,
wherein the control and evaluation unit (24, 34) is configured to receive hazard zone information about the hazard zone (26a, 26b, 38a) to be generated from the detected object (28, 38) and/or to determine hazard zone information with the aid of the monitoring sensor (10).

13. The sensor arrangement according to claim 12,
wherein the hazard zone information comprises at least one of the following pieces of information: binary information that a hazard zone (26a, 26b, 38a) is to be generated, a position, a speed, a previous or expected path of movement (42) or a geometry of the detected object (28, 38).

14. The sensor arrangement according to claim 12 or 13,
wherein the hazard zone information comprises at least one of the following pieces of information: a planned path of movement (42), a planned speed, a planned work step, a volume to be occupied in the future or a hazard zone configuration.

15. A method for safeguarding a monitored area (12) with at least one hazard zone (26a, 26b, 38a) with respect to a machine (26, 38), wherein objects (28, 38) in the monitored area (12) are detected and the positions of detected objects (28, 38) are compared with the hazard zone (26a, 26b, 38a), in order to initiate a safety-related response of the machine (26, 38) in the event of a dangerous position,
**characterized in that** a further hazard zone (26a, 26b, 38a) with respect to a detected object (28, 38) is generated and monitored.

## Revendications

1. Ensemble capteur pour la sécurisation d'une zone à surveiller (12) présentant au moins un emplacement de danger (26a, 26b, 38a) relatif à une machine (26, 38), l'ensemble capteur présentant au moins un capteur de surveillance optoélectronique (10) pour la détection d'objets (28, 38) dans la zone à surveiller (12) et une unité de commande et d'évaluation (24, 34) réalisée pour comparer la position d'objets détectés (28) avec l'emplacement de danger (26a, 26b, 38a) et pour, en cas de position dangereuse, déclencher une réaction de la machine (26, 38) relative à la sécurité,
**caractérisé en ce que**
l'unité de commande et d'évaluation (24, 34) est en outre réalisée pour générer et surveiller un autre emplacement de danger (38a) relatif à un objet détecté (38) pendant une opération de travail.

2. Ensemble capteur selon la revendication 1, dans lequel la comparaison de la position des objets détectés (28) avec un emplacement de danger (26a, 26b, 38a) comprend la détermination de la plus courte distance d'un objet (28) par rapport à l'emplacement de danger (26a, 26b, 38a).

3. Ensemble capteur selon la revendication 1 ou 2, dans lequel l'unité de commande et d'évaluation (24, 34) est réalisée pour déplacer avec l'objet détecté (38) l'autre emplacement de danger (38a) en tant qu'emplacement de danger dynamique (38a).

4. Ensemble capteur selon l'une des revendications précédentes, dans lequel le capteur de surveillance (10) est une caméra, en particulier une caméra 3D.

5. Ensemble capteur selon l'une des revendications précédentes, comportant une commande de sécurité (34) dans laquelle une partie au moins de l'unité de commande et d'évaluation (24, 34) est implémentée.

6. Ensemble capteur selon l'une des revendications précédentes, dans lequel l'unité de commande et d'évaluation (24, 34) est réalisée pour reconnaître, à l'aide de la détection par le capteur de surveillance (10), si un autre emplacement de danger (38a) relatif à un objet détecté (28, 38) est généré.

7. Ensemble capteur selon l'une des revendications précédentes, dans lequel l'unité de commande et d'évaluation (24, 34) identifie un contour ou une autre structure optiquement détectable de l'objet détecté (28, 38).

8. Ensemble capteur selon l'une des revendications précédentes, comportant un capteur supplémentaire (44), en particulier un lecteur de code optique ou un lecteur RFID, l'unité de commande et d'évaluation (24, 34) étant réalisée pour reconnaître, sur la base des données du capteur supplémentaire (44), si un autre emplacement de danger (38a) relatif à un objet détecté (28, 38) est généré.

9. Ensemble capteur selon l'une des revendications précédentes, dans lequel l'unité de commande et d'évaluation (24, 34) est réalisée pour reconnaître un objet détecté comme étant admissible à l'aide de la détection par le capteur de surveillance (10) ou sur la base de données provenant d'un capteur supplémentaire (44), un objet admissible ne déclenchant pas une réaction relative à la sécurité, quelle que soit sa position par rapport à l'emplacement de danger (26a, 26b, 38a).

10. Ensemble capteur selon l'une des revendications précédentes, dans lequel l'unité de commande et d'évaluation (24, 34) est réalisée pour émettre un message de retour à l'objet détecté (38), indiquant la génération d'un emplacement de danger (38a).

11. Ensemble capteur selon l'une des revendications précédentes, dans lequel l'unité de commande et d'évaluation (24, 34) est réalisée pour générer un emplacement de danger (38a) relatif à un objet détecté (38) uniquement à au moins une position déterminée (46) dans la zone à surveiller (12).

12. Ensemble capteur selon l'une des revendications précédentes, dans lequel l'unité de commande et d'évaluation (24, 34) est réalisée pour recevoir de l'objet détecté (38) des informations relatives à l'emplacement de danger (38a) à générer et/ou pour les déterminer à l'aide du capteur de surveillance (10).

13. Ensemble capteur selon la revendication 12, dans lequel les informations relatives à l'emplacement de danger comprennent au moins l'une des informations suivantes : une information binaire selon laquelle un emplacement de danger (38a) doit être généré, une position, une vitesse, une trajectoire de mouvement précédente ou attendue (42) ou une géométrie de l'objet détecté (38).

14. Ensemble capteur selon la revendication 12 ou 13, dans lequel les informations relatives à l'emplacement de danger comprennent au moins l'une des informations suivantes : une trajectoire de déplacement prévue (42), une vitesse prévue, une étape de travail prévue, un volume occupé dans le futur ou une configuration de l'emplacement de danger.

15. Procédé pour sécuriser une zone à surveiller (12) présentant au moins un emplacement de danger (26a, 26b, 38a) relatif à une machine (26, 38), dans lequel des objets (28, 38) dans la zone à surveiller (12) sont détectés et les positions des objets détectés (28) sont comparées avec ledit emplacement de danger (26a, 26b, 38a), afin de déclencher une réaction de la machine (26, 38) relative à la sécurité en cas de position dangereuse, **caractérisé en ce que**
relatif à un objet détecté (38) un autre emplacement de danger (38a) est généré et surveillé.
